(19) **Europäisches Patentamt European Patent Office Office européen des brevets**

(11) **EP 2 321 822 B1**

(12) **EUROPEAN PATENT SPECIFICATION**

(45) Date of publication and mention of the grant of the patent:
**24.10.2012 Bulletin 2012/43**

(51) Int Cl.:
*G11B 7/007* (2006.01)   *G11B 7/013* (2006.01)
*G11B 7/09* (2006.01)   *G11B 7/26* (2006.01)

(21) Application number: **09811103.2**

(22) Date of filing: **24.08.2009**

(86) International application number:
**PCT/EP2009/060858**

(87) International publication number:
**WO 2010/026068 (11.03.2010 Gazette 2010/10)**

(54) **COMPATIBLE OPTICAL RECORDING MEDIUM**

KOMPATIBLES OPTISCHES AUFZEICHNUNGSMEDIUM

SUPPORT D ENREGISTREMENT OPTIQUE COMPATIBLE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **05.09.2008 EP 08305530**

(43) Date of publication of application:
**18.05.2011 Bulletin 2011/20**

(73) Proprietor: **Thomson Licensing 92130 Issy-les-Moulineaux (FR)**

(72) Inventors:
 • **KHRUSHCHEV, Sergey 78089 Unterkirnach (DE)**
 • **RESCHKE, Uwe 70190 Stuttgart (DE)**
 • **KIMMELMANN, Stefan 78052 Villingen-Pfaffenweiler (DE)**

(74) Representative: **Schmidt-Uhlig, Thomas Deutsche Thomson OHG European Patent Operations Karl-Wiechert-Allee 74 30625 Hannover (DE)**

(56) References cited:
**EP-A- 0 745 978   US-A- 4 507 763**

**Description**

The present invention relates to a format of a recordable optical recording medium, which has the appearance of a read-only optical recording medium for most players and recorders, and to a method and an apparatus for reading from and/or writing to the recordable optical recording medium.

The distribution of digital data such as movies or software on optical recording media today is established as the main distribution channel. However, this means that stores need to stock a large amount of titles in order to be able to provide most requested titles immediately to their customers without having to order them.

In order to reduce this need for a large stock several solutions for a manufacturing on demand or a distribution via networks have been proposed. The optical recording medium, typically a DVD (digital versatile disk), is recorded as soon as a title is requested by a customer. Recording is done with a special recorder provided in a store, with a kiosk type recording terminal, or by a special consumer recorder connected to a network. These special recorders allow to write data to a recordable DVD in such a way that the DVD has the appearance of a CSS-encrypted DVD-Video (ROM) disk, even though it is a specially finalized recordable DVD. For recording the optical recording medium has a groove structure to guide an optical pickup unit relative to the optical recording medium.

Apart from the above mentioned manufacturing on demand applications, there also exist a plurality of applications for pre-recorded optical recording media having at least some recording capabilities. For example, for serialization and authentication of pre-recorded optical recording media a recordable area is needed on pre-recorded optical recording media. The recordable area is used for adding a unique identifier to the pre-recorded medium after the stamping process at the manufacturing plant. Similarly, information stored on the pre-recorded medium can be used to replace a required software key, such as a serial number, which otherwise has to be input manually with a keyboard when installing the software. The information may also be used as an authentication key to unlock the content stored on the pre-recorded medium.

A further application of recordable areas on a pre-recorded medium is related to the so-called retail activation. According to this application an optical recording medium cannot be played back after manufacturing, e.g. because specific parts of the content are missing. Instead, the medium needs to be activated at the point of sale using a special recorder for making the necessary modifications to the medium, e.g. by adding the missing content.

In order to establish the above described solutions as further distribution channels, the recorded optical recording media have to be compatible with as many standard players and recorders as possible. While this is usually not a problem for players, the situation is different with recorders.

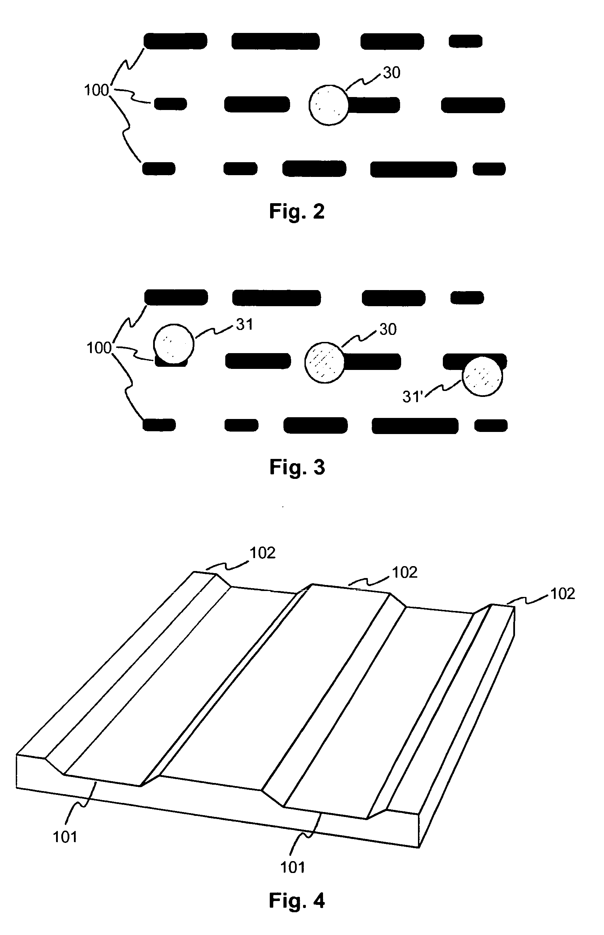

Several methods are known for detecting the position of the light spot on an optical recording medium. The two most popular are Differential-Phase-Detection (DPD, used for ROM formats) and radial Push-Pull (used for RE formats). However, those two methods require substrates having embossed features, i.e. pits for ROM formats or a land/groove structure for RE formats. A typical land/groove structure is depicted in Fig. 2.

In this regard, EP 0 745 978 discloses a tracking method and a device for use with an optical recording medium. During recording of data tracking is performed using two auxiliary beams, which are illuminated on embossed guide tracks, as done in the conventional three-beam method. During reading of data tracking is performed by the main beam using the push-pull method.

However, as a copy protection mechanism some optical pickups used in recorders do not allow to retrieve data from an optical recording medium indicated as a read-only medium when a push-pull signal originating from the land/groove structure is found, which is an indication of a recordable optical recording medium. Such incompatibilities have to be avoided.

US 4,507,763 reflecting the preamble of claim 1 discloses an optical recording medium, which has a recording surface divided into a number of concentric recording regions. A number of concentric guide tracks are formed at the boundaries between successive recording regions. Concentric or spiral information tracks are formed in the recording regions with a constant pitch in reference to respective guide tracks. During recording of a certain recording region the corresponding guide track is read out by a tracking light beam. The recording light beam is controlled by the tracking signal derived from the guide track.

In EP 1 933 313 a recordable optical recording medium with a specially designed land/groove structure is disclosed. The optical recording medium is recorded using a laser with a wavelength around 405 nm, whereas it is read using a laser with a wavelength around 650 nm. The specially designed land/groove structure allows to have a push-pull signal at 405 nm, but to have only a strongly reduced push-pull signal at 650 nm.

The solution proposed in the above document has the drawback that it is difficult to fulfill the DVD-ROM specification, because a new material needs to be used, which has a high absorption in the blue wavelength range and a high reflectivity in the red wavelength range. Also, a light source emitting a light beam in the blue wavelength range is necessary for recording. This means that the recording medium essentially needs to fulfill the tighter specifications regarding tilt, cover layer thickness, refractive index, etc., which are applicable to high data density recording media intended to be read with a light beam in the blue wavelength range. Finally, the recorded pit structure shows different properties in the blue wavelength range and in the red wavelength range. Therefore, the recorded medium needs to be checked after recording using a light beam in the red wavelength range.

It is an object of the invention to propose a further format for a recordable optical recording medium, which has the appearance of a read-only optical recording medium for most players and recorders.

According to the invention, this object is achieved by an optical recording medium according to the subject matter of claim 1.

The optical recording medium according to the invention has the advantage that it enables tracking without the need for embossed features within the recording area, e.g. pits or grooves. As a consequence the optical recording medium has the appearance of a read-only optical recording medium and is compatible with most players and recorders. At the same time known layer stacks can be used, which allow high speed recording. Furthermore, the optical recording medium does not need to fulfill any tighter specifications regarding tilt, cover layer thickness, refractive index, etc.

Advantageously, the optical recording medium is a DVD-like medium. The DVD today is a well established medium for transporting and providing audio-visual data such as movies. Many households are already equipped with the DVD players or recorders. Therefore, it is desirable to make use of the huge customer base also for manufacturing on demand and a distribution via networks. Also, the invention is applicable to any existing materials that are already used for the manufacturing of DVDs. The known DVD specifications concerning the recording speed and the mechanical media parameters are applicable. Of course, the invention is usable for any type of optical recording medium.

Preferably, the guide structure is located before or at the beginning of a lead in area. This ensures that the optical recording medium is compatible with most players and recorders, as a push-pull signal originating from the guide structure, which is an indication of a recordable optical recording medium, is only present outside the recording area.

Favorably, the guide structure is a land/groove structure or includes pre-recorded pits. In this way the guide structure is detectable using known tracking methods, such as push-pull tracking.

A method for writing to an optical recording medium according to the invention has the steps of:

- generating at least a main light beam and a further light beam coupled to the main light beam;
- illuminating the single guide structure with the further light beam;
- generating a tracking error signal for the main light beam from a fraction of the further light beam reflected by the single guide structure; and
- writing data to the optical recording medium with the main light beam such that the written data form a continuation of the single guide structure.

According to the invention, a tracking error signal generated by a further light beam coupled to the main light beam is used for controlling the position of the main light beam. This is necessary as no guide structure is present at the location of the main light beam. In other words, based on at least one track of an initial guide structure the main light beam writes its own guide structure for later tracks. The further light beam advantageously is one of the side beams generated by a diffraction grating, a partial beam generated by a beam splitter, or a light beam generated by an additional light source.

Advantageously, the distance between the main light beam and the further light beam on the optical recording medium is an integer multiple of one track pitch. This ensures that after recording the distance between any two adjacent tracks is exactly one track pitch.

In order to implement the above writing method, an apparatus for writing to an optical recording medium according to the invention has:

- means for generating at least a main light beam and a further light beam coupled to the main light beam;
- means for illuminating the single guide structure with the further light beam;
- means for generating a tracking error signal for the main light beam from a fraction of the further light beam reflected by the single guide structure; and
- means for writing data to the optical recording medium with the main light beam such that the written data form a continuation of the single guide structure.

The means for generating at least the main light beam and the further light beam preferably is a diffraction grating, a beam splitter or an additional light source. The apparatus has the advantage that it corresponds essentially to a standard pickup. Only the servo electronics and the detector for the further light beam need to be adapted, such that a tracking error signal for the main light beam is generated using the further light beam.

A method for manufacturing an optical recording medium according to the invention has the steps of:

- applying at least a recording layer on a substrate;
- applying at least a cover layer on the recording layer; and
- forming the single guide structure for tracking outside the single recording area, and extending only over one or a few track spirals or concentric tracks.

In order to implement the above manufacturing method, an apparatus for manufacturing an optical recording medium has:

- means for applying at least a recording layer on a substrate;
- means for applying at least a cover layer on the recording layer; and
- means for forming the single guide structure for tracking outside the single recording area, and extending only over one or a few track spirals or concentric tracks.

The recording layer is favorably applied by sputtering, spin coating or other known processes. Likewise, the cover layer is advantageously applied by spin coating or flooding or the like. The manufacturing method can easily be implemented by slightly modifying existing manufacturing solutions. It is sufficient to ensure that the guide structure for tracking only extends over one or a few track spirals or concentric tracks.

Advantageously, the guide structure is formed by molding before applying the cover layer or by recording a pit train before or after applying the cover layer.

Molding has the advantage that it does not need an additional manufacturing step, as it is a normal manufacturing step during the production of recordable media. It is sufficient to modify the mold in such way that the guide structure for tracking only extends over one or a few track spirals or concentric tracks outside the recording area. On the other hand, recording a pit train before or after applying the cover layer offers a greater freedom of modifying the manufacturing process for different types of recording media, as the properties of the recorded pit train can be adjusted by adapting the write strategy.

Favorably, the pit train is recorded using a tracking actuator by applying a voltage ramp to a tracking coil of the tracking actuator, which continuously increases during a revolution of the optical recording medium and which is chosen such that after a complete revolution of the optical recording medium the tracking actuator has shifted a recording light beam on the optical recording medium by the amount of the track pitch.

In this way it is ensured that after recording the distance between two tracks in the recording area is exactly one track pitch, so that the recorded medium fulfills the applicable specifications.

For a better understanding the invention shall now be explained in more detail in the following description with reference to the figures. It is understood that the invention is not limited to this exemplary embodiment and that specified features can also expediently be combined and/or modified without departing from the scope of the present invention as defined by the appended claims. In the figures:

Fig. 1    schematically shows a pickup for reading from an optical recording medium;

Fig. 2    depicts the principle of differential phase detection tracking on a pre-recorded optical recording medium;

Fig. 3    depicts the principle of three-beam tracking on a pre-recorded optical recording medium;

Fig. 4    shows a land/groove structure of a known recordable optical recording medium;

Fig. 5    illustrates a top view of an optical recording medium according to the invention;

Fig. 6    shows a cross section of the optical recording medium of Fig. 5;

Fig. 7    shows the voltage applied to a tracking actuator for generating a track spiral on the optical recording medium according to the invention;

Fig. 8    depicts the pickup of Fig. 1 when scanning the optical recording medium according to the invention;

Fig. 9    shows the surface of a pre-recorded optical recording medium having a recordable area; and

Fig. 10   shows the surface of a further pre-recorded optical recording medium having a recordable area.

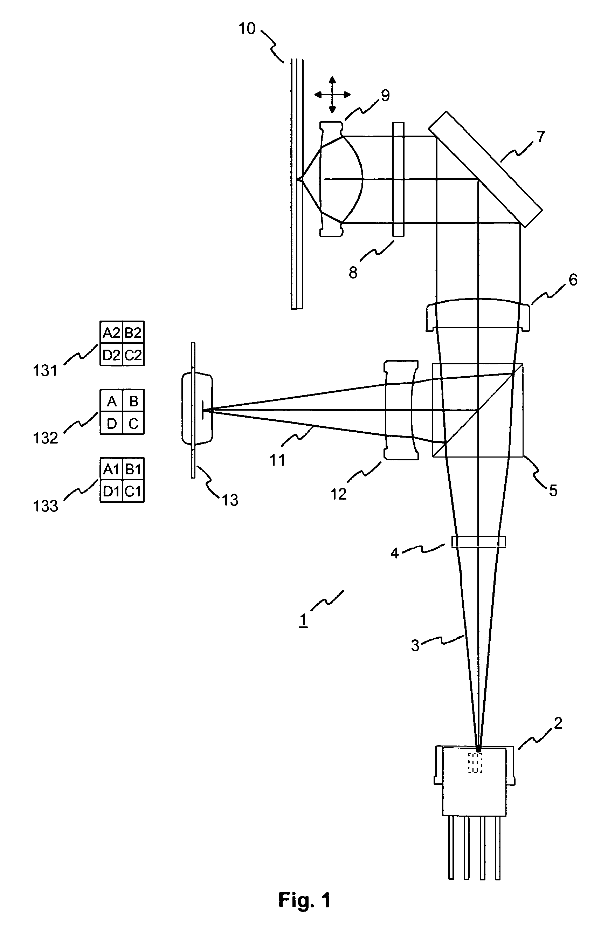

In Fig. 1 a pickup 1 for reading from an optical recording medium 10 is shown schematically. A laser diode 2 emits a linearly polarized light beam 3, which passes through a diffraction grating 4. The diffraction grating 4 generates two first order side beams (not shown) in addition to the zeroth order main light beam 3. The side beams are used for three-beam tracking. The main light beam 3 and the side beams light beams pass through a polarization beam splitter cube 5 and are collimated by a collimator lens 6. A mirror 7 directs the collimated light beams towards a quarter wave plate 8, which transforms the light beams 3 into circular polarized light beams. An objective lens 9 finally focuses the light beams onto an optical recording medium 10. The light beams 11 reflected by the optical recording medium 10 are collimated by the objective lens 9 and pass through the quarter wave plate 8, which transforms the reflected light beams 11 into linear polarized light beam 11. Due to the quarter wave plate 8, the direction of polarization of the reflected light beams 11 is perpendicular to the direction of polarization of the initial light beams. The reflected light beams 11 are thus deflected by the polarization beam splitter cube 5 towards a focusing lens 12, which focuses the reflected light beam 11 onto a detector 13. The detector 13 has a plurality of detection areas 131, 132, 133 for generating tracking and focus error signals in addition to a data signal.

Fig. 2 shows a typical structure of a pre-recorded optical recording medium. As can be seen, the pre-recorded optical recording medium has a plurality of data tracks 100 formed by pre-recorded pits. For such a structure usually the so called differential phase detection (DPD) tracking method is used. A single light spot 30 scanning one of the tracks 100 is needed for this purpose.

In contrast, the three-beam tracking method makes use of three light spots 30, 31, 31' falling onto three adjacent tracks. This is illustrated schematically in Fig. 3. A main light beam 30 is located on a track 100. Two side beams 31, 31' are arranged shifted with respect to the main light beam 30 such that they only fall partly on the track 100 scanned by the main light beam 30. The reflected side beams 31, 31' are detected by separate detector elements of the photo detector 13. As the reflectivity of the tracks 100 is different from the reflectivity of the areas between the tracks 100, any displacement of the side beams 31, 31' relative to the track 100 manifests itself as a change of the intensity detected by the separate detector elements of the photo detector 13. This change of intensity is used for tracking.

In case of recordable optical recording media, no pre-recorded pits are present. In order to enable tracking, a land/groove structure is usually provided in the recording layer. Fig. 4 shows such a land/groove structure of a known recordable optical recording medium 10. As can be seen, a plurality of grooves 101 are arranged between the lands 102.

In the following the invention is explained with reference to a DVD-like optical recording medium, which is read with a wavelength around 650nm. Of course, the general idea of the invention is also applicable to other types of optical recording media.

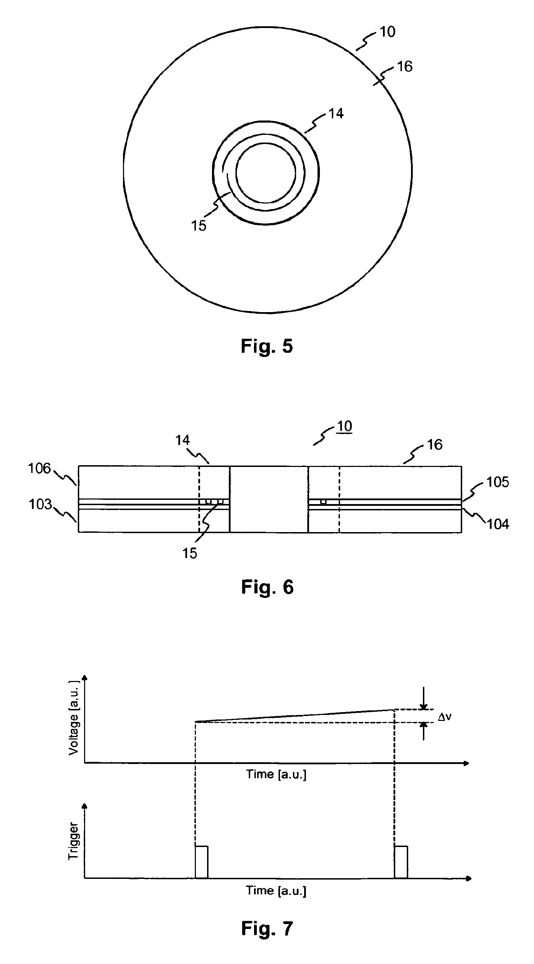

In Fig. 5 a top view of an optical recording medium 10 according to the invention is illustrated schematically. The optical recording medium has a specially molded guide structure 15 consisting of molded pits or grooves outside the recording area 16. The guide structure 15 extends over one or some complete track spirals or concentric tracks. Advantageously, the guide structure 15 is located before or at the beginning of the Lead-in area 14. The recording area 16 does not have any guide structure 15.

Apart from molding the guide structure 15 during the manufacturing process, it is likewise possible to use a recording process for producing the guide structure 15. In this case a precise recorder is used for recording a pit train. During recording, a continuously increasing ramping voltage is applied to the tracking actuator. The ramping voltage is chosen such that after a complete revolution of the optical recording medium 10 the tracking actuator has shifted the recording light beam on the optical recording medium 10 by exactly the amount of the track pitch. Alternatively, a precise movement of a recording pickup is performed during recording of the pit train. In this case instead of moving only the tracking actuator the whole pickup is moved.

Fig. 6 shows a cross section of the optical recording medium 10 of Fig. 5. The optical recording medium 10 has a substrate 103, a reflective layer 104, a recording layer 105 and a cover layer 106. Of course, additional layers may be provided if necessary. Also, the reflective layer 104 may be part of the recording layer 105. As can be seen, the guide structure 15 only extends over one or some complete track spirals or concentric tracks.

In the upper part of Fig. 7 such a ramping voltage is depicted. The lower part of Fig. 7 illustrates a trigger signal indicating the start of a new revolution of the optical recording medium. The voltage difference Δv at the end of one revolution is given by the desired track pitch and the actuator sensitivity as Δv = Track pitch / Actuator sensitivity.

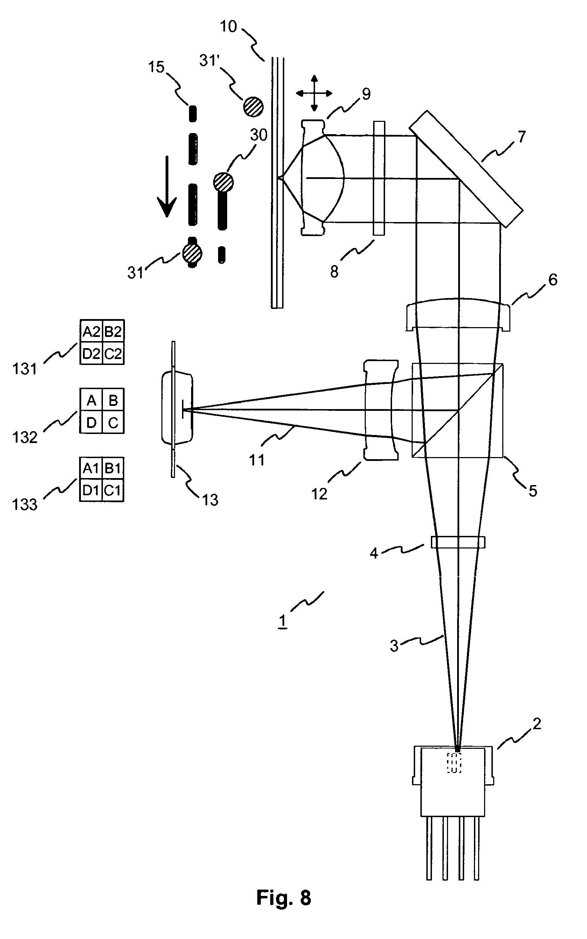

Fig. 8 shows a pickup 1 according to the invention during scanning of the optical recording medium 10 of Fig. 5. The pickup 1 corresponds essentially to the pickup 1 of Fig. 1. However, for tracking the pickup 1 uses a combination of three-beam tracking and DPD tracking. In order to prevent recording by the side beams 31, 31', the grating 4 has an aspect ratio that ensures that the intensity of the side beams 31, 31' is too small for recording, e.g. I1:I0=1:17, where I1 and I0 are the intensities of the side beams 31, 31' and the main light beam 30, respectively. The grating 4 is adjusted in such way that the distance between the main light beam 30 and the side beams 31, 31' on the optical recording medium 10 is exactly one track pitch, i.e. 0.74 μm in case of DVD. It may likewise be an integer multiple of one track pitch. Assume that the left side beam 31 of Fig. 7 falls on the detectors A1-D1 and the right side beam 31' of Fig. 8 falls on the detectors A2-D2. As the right side beam 31' is moving on the mirror surface of the optical recording medium 10, the sum signal of the detectors A2-D2 can be used for normalizing. The left side beam 31 impinges on the guide structure 15 or on already recorded pits and is used for generating the tracking signal as follows:

$$DPD = \Delta\varphi \left\{ \frac{A_1 + C_1}{A_2 + C_2} \ and \ \frac{B_1 + D_1}{B_2 + D_2} \right\} .$$

In other words, during the recording of data the invention makes use of the already recorded data for tracking as no land/groove structure is present.

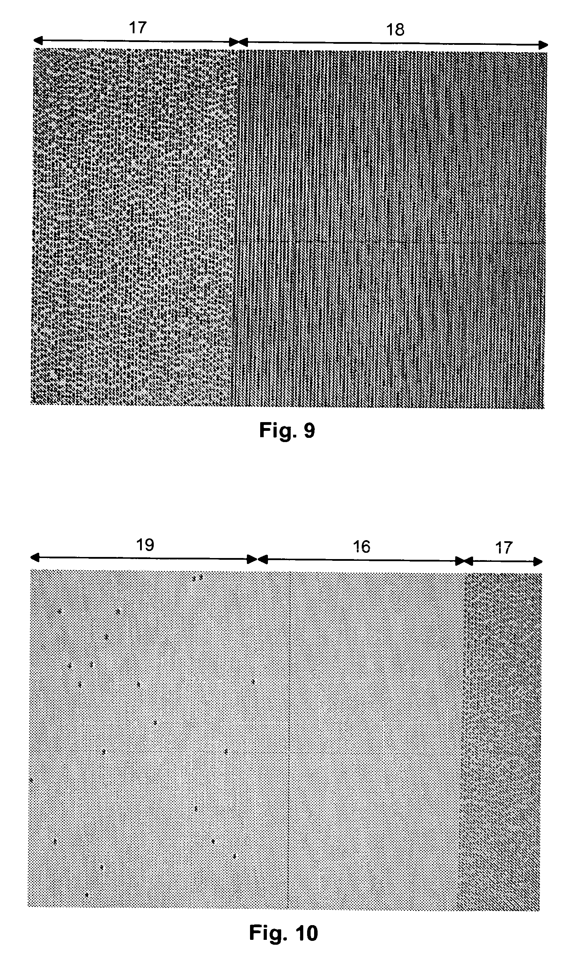

A photograph of the surface of a known prerecorded DVD-like optical recording medium having an additional recordable area 18 is shown in Fig. 9. A first area 17 contains pre-recorded data in the form of pits. A recordable second area 18 has a land/groove structure to enable tracking during a recording process. This prerecorded medium has the drawback that is not fully compatible with existing recorders, as some recorders refuse playback due to the land/groove structure.

A photograph of the surface of an optical recording medium according to the invention having a prerecorded area 17 as well as a recordable area 16 is shown in Fig. 10. The recordable area 16 does not have any tracking structure. Instead, the pre-recorded data of the pre-recorded area 17 or already recorded data of the recordable area 16 are used for tracking. In the figure, an additional recordable area 19 is shown. This area includes a special tracking structure that is used when recording with a wavelength of 405nm.

**Claims**

1. Optical recording medium (10) with at least a recording layer (105) with a recording area (16) and a guide structure (15) for tracking located outside the recording area (16), which does only extend over one or a few track spirals or concentric tracks, **characterized in that** the recording area (16) is a single recording area (16) and **in that** the guide structure (15) is a single guide structure (15) located outside the single recording area (16).

2. Optical recording medium according to claim 1, wherein the single continuous guide structure (15) is located before or at the beginning of a lead in area (14).

3. Optical recording medium according to claim 1 or 2, **wherein** the single guide structure (15) is a land/groove structure or includes pre-recorded pits.

4. Method for manufacturing an optical recording medium (10) with a single recording area (16) and a single guide structure (15) for tracking, **having** the steps of:

   - applying at least a recording layer (105) with the single recording area (16) on a substrate (103);
   - applying at least a cover layer (106) on the recording layer (105); and
   - forming the single guide structure (15) for tracking outside the single recording area (16) and extending only over one or a few track spirals or concentric tracks.

5. Method according to claim 4, **wherein** the single guide structure (15) is formed before or at the beginning of a lead in area (14).

6. Method according to claim 4 or 5, **wherein** the single guide structure (15) is formed by molding before applying the cover layer (106) or by recording a pit train before or after applying the cover layer (106).

7. Method according to claim 6, **wherein** the pit train is recorded using a tracking actuator by applying a voltage ramp to a tracking coil of the tracking actuator, which continuously increases during a revolution of the optical recording medium (10) and which is chosen such that after a complete revolution of the optical recording medium (10) the tracking actuator has shifted a recording light beam on the optical recording medium (10) by the amount of the track pitch.

8. Apparatus for manufacturing an optical recording medium (10) with a single recording area (16) and a single guide structure (15) for tracking, **having:**

   - means for applying at least a recording layer (105) with the single recording area (16) on a substrate (103);
   - means for applying at least a cover layer (106) on the recording layer (105); and
   - means for forming the single guide structure (15) for tracking outside the single recording area (16) and extending only over one or a few track spirals or concentric tracks.

9. Apparatus according to claim 8, **wherein** the means for forming the single guide structure (15) is a molding means for molding the single guide structure (15) before applying the cover layer (106), or a recorder for recording a pit train before or after applying the cover layer (106).

10. Method for writing to an optical recording medium (10) according to claim 1, **having** the steps of:

    - generating at least a main light beam (30) and a further light beam (31) coupled to the main light beam (30);
    - illuminating the single guide structure (15) with the further light beam (31);
    - generating a tracking error signal for the main light beam (30) from a fraction of the further light beam (31) reflected by the single guide structure (15); and
    - writing data to the optical recording medium (10) with the main light beam (30) such that the written data form a continuation of the single guide structure (15).

11. Method according to claim 10, **wherein** a distance between the main light beam (30) and the further light beam (31) on the optical recording medium (10) is an integer multiple of one track pitch.

12. Apparatus for writing to an optical recording medium (10) according to claim 1, **having:**

    - means (2, 4) for generating at least a main light beam (30) and a further light beam (31) coupled to the main light beam (30);
    - means (9) for illuminating the single guide structure (15) with the further light beam (31);
    - means (131, 133) for generating a tracking error signal for the main light beam (30) from a fraction of the further light beam (31) reflected by the single guide structure (15); and

- means (2, 9) for writing data to the optical recording medium (10) with the main light beam (30) such that the written data form a continuation of the single guide structure (15).

13. Apparatus according to claim 12, **wherein** a distance between the main light beam (30) and the further light beam (31) on the optical recording medium (10) is an integer multiple of one track pitch.

14. Mold for an apparatus for manufacturing an optical recording medium (10), with a recording area (16) and a guide structure (15) for tracking located outside the recording area (16), which does only extend over one or a few track spirals or concentric tracks, **characterized in that** the recording area (16) is a single recording area (16) and **in that** the guide structure (15) is a single guide structure (15) located outside the single recording area (16).

**Patentansprüche**

1. Optisches Aufzeichnungsmedium (10) mit mindestens einer Aufzeichnungsschicht (105) mit einem Aufzeichnungsbereich (16) und mit einer Führungsstruktur (15) zur Spurhaltung, die außerhalb des Aufzeichungsbereichs (16) lokalisiert ist, die nur über eine oder einige Spurspiralen oder konzentrische Spuren verläuft, **dadurch gekennzeichnet, dass** der Aufzeichnungsbereich (16) ein einzelner Aufzeichnungsbereich (16) ist und dass die Führungsstruktur (15) eine einzelne Führungsstruktur (15) ist, die außerhalb des einzelnen Aufzeichnungsbereichs (16) lokalisiert ist.

2. Optisches Aufzeichnungsmedium nach Anspruch 1, **bei dem** die einzelne ununterbrochene Führungsstruktur (15) vor oder zu Beginn eines Einlaufspurbereichs (14) lokalisiert ist.

3. Optisches Aufzeichnungsmedium nach Anspruch 1 oder 2, **bei dem** die einzelne Führungsstruktur (15) eine Land/Rillen-Struktur ist oder im Voraus aufgezeichnete Pits enthält.

4. Verfahren zum Herstellen eines optischen Aufzeichnungsmediums (10) mit einem einzelnen Aufzeichnungsbereich (16) und mit einer einzelnen Führungsstruktur (15) zur Spurhaltung, wobei das Verfahren die folgenden Schritte **aufweist:**

   - Auftragen mindestens einer Aufzeichnungsschicht (105) mit einem einzelnen Aufzeichnungsbereich (16) auf ein Substrat (103);
   - Auftragen mindestens einer Deckschicht (106) auf die Aufzeichnungsschicht (105); und
   - Bilden der einzelnen Führungsstruktur (15) zur Spurhaltung außerhalb des einzelnen Aufzeichnungsbereichs (16) und der nur über eine oder einige Spurspiralen oder konzentrische Spuren verläuft.

5. Verfahren nach Anspruch 4, **bei dem** die einzelne Führungsstruktur (15) vor oder zu Beginn eines Einlaufspurbereichs (14) gebildet wird.

6. Verfahren nach Anspruch 4 oder 5, **bei dem** die einzelne Führungsstruktur (15) durch Formen vor Auftragen der Deckschicht (106) oder durch Aufzeichnen eines Pit-Zugs vor oder nach Auftragen der Deckschicht (106) gebildet wird.

7. Verfahren nach Anspruch 6, **bei dem** der Pit-Zug unter Verwendung eines Spurhaltungsaktuators dadurch aufgezeichnet wird, dass an eine Spurhaltungsspule des Spurhaltungsaktuators ein Spannungsanstieg angelegt wird, der während einer Umdrehung des optischen Aufzeichnungsmediums (10) ununterbrochen zunimmt und der in der Weise gewählt wird, dass der Spurhaltungsaktuator nach einer vollständigen Umdrehung des optischen Aufzeichnungsmediums (10) einen Aufzeichnungslichtstrahl auf dem optischen Aufzeichnungsmedium (10) um den Betrag des Spurabstands verschoben hat.

8. Vorrichtung zum Herstellen eines optischen Aufzeichnungsmediums (10) mit einem einzelnen Aufzeichnungsbereich (16) und mit einer einzelnen Führungsstruktur (15) zur Spurhaltung, wobei die Vorrichtung **aufweist:**

   - ein Mittel zum Auftragen mindestens einer Aufzeichnungsschicht (105) mit einem einzelnen Aufzeichnungsbereich (16) auf ein Substrat (103);
   - ein Mittel zum Auftragen mindestens einer Deckschicht (106) auf die Aufzeichnungsschicht (105); und
   - ein Mittel zum Bilden der einzelnen Führungsstruktur (15) zur Spurhaltung außerhalb des einzelnen Aufzeichnungsbereichs (16) und die nur über eine oder einige Spurspiralen oder konzentrische Spuren verläuft.

9. Vorrichtung nach Anspruch 8, **bei der** das Mittel zum Bilden der einzelnen Führungsstruktur (15) ein Formmittel zum Formen der einzelnen Führungsstruktur (15) vor Auftragen der Deckschicht (106) oder eine Aufzeichnungseinrichtung zum Aufzeichnen eines Pit-Zugs vor oder nach Auftragen der Deckschicht (106) ist.

10. Verfahren zum Schreiben auf ein optisches Aufzeichnungsmedium (10) nach Anspruch 1, wobei das Verfahren die folgenden Schritte **aufweist:**

- Erzeugen mindestens eines Hauptlichtstrahls (30) und eines weiteren Lichtstrahls (31), der mit dem Hauptlichtstrahl (30) gekoppelt ist;
- Anstrahlen der einzelnen Führungsstruktur (15) mit dem weiteren Lichtstrahl (31);
- Erzeugen eines Spurfehlersignals für den Hauptlichtstrahl (30) aus einem Bruchteil des weiteren Lichtstrahls (31), der durch die einzelne Führungsstruktur (15) reflektiert wird; und
- Schreiben von Daten mit dem Hauptlichtstrahl (30) auf das optische Aufzeichnungsmedium (10) in der Weise, dass die geschriebenen Daten eine Fortsetzung der einzelnen Führungsstruktur (15) bilden.

11. Verfahren nach Anspruch 10, **bei dem** eine Entfernung zwischen dem Hauptlichtstrahl (30) und dem weiteren Lichtstrahl (31) auf dem optischen Aufzeichnungsmedium (10) ein ganzzahliges vielfaches eines Spurabstands ist.

12. Vorrichtung zum Schreiben auf ein optisches Aufzeichnungsmedium (10) nach Anspruch 1, wobei die Vorrichtung **aufweist:**

- Mittel (2, 4) zum Erzeugen mindestens eines Hauptlichtstrahls (30) und eines weiteren Lichtstrahls (31), der mit dem Hauptlichtstrahl (30) gekoppelt ist;
- Mittel (9) zum Anstrahlen der einzelnen Führungsstruktur (15) mit dem weiteren Lichtstrahl (31);
- Mittel (131, 133) zum Erzeugen eines Spurfehlersignals für den Hauptlichtstrahl (30) aus einem Bruchteil des weiteren Lichtstrahls (31), der durch die einzelne Führungsstruktur (15) reflektiert wird; und
- Mittel (2, 9) zum Schreiben von Daten mit dem Hauptlichtstrahl (30) auf das optische Aufzeichnungsmedium (10) in der Weise, dass die geschriebenen Daten eine Fortsetzung der einzelnen Führungsstruktur (15) bilden.

13. Vorrichtung nach Anspruch 12, **bei der** eine Entfernung zwischen dem Hauptlichtstrahl (30) und dem weiteren Lichtstrahl (31) auf dem optischen Aufzeichnungsmedium (10) ein ganzzahliges vielfaches eines Spurabstands ist.

14. Form für eine Vorrichtung zum-Herstellen eines optischen Aufzeichnungsmediums (10) mit einem Aufzeichnungsbereich (16) und mit einer Führungsstruktur (15) zur Spurhaltung, die außerhalb des Aufzeichnungsbereichs (16) lokalisiert ist, die nur über eine oder einige Spurspiralen oder konzentrische Spuren verläuft, **dadurch gekennzeichnet, dass**
der Aufzeichnungsbereich (16) ein einzelner Aufzeichnungsbereich (16) ist und dass die Führungsstruktur (15) eine einzelne Führungsstruktur (15) ist, die außerhalb des einzelnen Aufzeichnungsbereichs (16) lokalisiert ist.

**Revendications**

1. Support d'enregistrement optique (10) avec au moins une couche d'enregistrement (105) avec une zone d'enregistrement (16) et une structure guide (15) pour le suivi situé hors de la zone d'enregistrement (16), qui s'étend uniquement sur une ou plusieurs spirales de pistes ou pistes concentriques, **caractérisé en ce que** la zone d'enregistrement (16) est une zone unique d'enregistrement (16) et **en ce que** la structure du guide (15) est une structure unique de guide (15) située à l'extérieur de la zone unique d'enregistrement (16).

2. Support d'enregistrement optique selon la revendication **1, dans lequel** la structure de guide continue unique (15) est située avant ou au début d'une broche de raccordement dans la zone (14).

3. Support d'enregistrement optique selon la revendication 1 ou 2, **dans lequel** la structure de guide unique (15) est une structure plane/à rainure ou comprend des creux préenregistrés.

4. Procédé pour la fabrication d'un support d'enregistrement optique (10) avec une zone unique d'enregistrement (16) et une structure de guide unique (15) pour le suivi, **comprenant** les étapes suivantes :

- application d'au moins une couche d'enregistrement (105) avec la zone d'enregistrement unique (16) sur substrat (103);
- application d'au moins une couche de recouvrement (106) sur la couche d'enregistrement (105) ; et
- formation d'une structure de guide unique (15) pour le suivi à l'extérieur de la zone d'enregistrement unique (16) et l'extension sur uniquement une ou plusieurs spirales de pistes ou pistes concentriques.

5. Procédé selon la revendication 4, **dans lequel** la structure de guide unique (15) se forme avant ou au début de la broche de raccordement dans la zone (14)

6. Procédé selon la revendication 4 ou 5, **dans lequel** la structure de guide unique (15) est formée par moulage avant l'application de la couche de recouvrement (106) ou en enregistrant une suite de creux avant ou après l'application de la couche de recouvrement (106).

**7.** Procédé selon la revendication 6, dans lequel la suite de creux est enregistrée à l'aide d'un mécanisme de suivi en appliquant une rampe de tension à une bobine de suivi du mécanisme de suivi, qui augmente en continu lors d'une révolution du support d'enregistrement optique (10) et qui est choisi de sorte que après une révolution complète du support d'enregistrement optique (10) le mécanisme de suivi a déplacé un faisceau de lumière d'enregistrement sur le support d'enregistrement optique (10) par le montant du pas transversal.

**8.** Appareil pour la fabrication d'un support d'enregistrement optique (10) avec une zone d'enregistrement unique (16) et une structure de guide unique (15) pour le suivi, **comprenant:**

    - un moyen permettant l'application d'au moins une couche d'enregistrement (105) avec la zone d'enregistrement unique (16) sur substrat (103) ;
    - un moyen permettant l'application d'au moins une couche de recouvrement (106) sur la couche d'enregistrement (105) ; et
    - un moyen permettant la formation d'une structure de guide unique (15) pour le suivi à l'extérieur de la zone unique d'enregistrement unique (16) et l'extension sur seulement une ou plusieurs spirales de piste ou pistes concentriques.

**9.** Procédé selon la revendication 8, **dans lequel** le moyen de formation de la structure de guide unique (15) est un moyen de moulage pour mouler les structure de guide unique (15) avant application de la couche de recouvrement (106) ou en enregistrant une suite de creux avant ou après l'application de la couche de recouvrement (106).

**10.** Procédé pour l'écriture sur un support d'enregistrement optique (10) selon la revendication 1, **comprenant** les étapes suivantes :

    - génération d'au moins un faisceau de lumière supplémentaire (30) couplé au faisceau de lumière principal (30) ;
    - illumination de la structure de guide unique (15) avec le faisceau de lumière supplémentaire (31) ;
    - génération un signal d'erreur de suivi pour le faisceau de lumière principal (30) à partir d'une fraction du faisceau de lumière supplémentaire (31) reflété par la structure de guide unique (15) ; et
    - écriture de données sur le support d'enregistrement optique (10) avec le faisceau de lumière principal (30) tel que les données écrites forment une continuation de la structure de guide unique (15).

**11.** Procédé selon la revendication 10, **dans lequel** une distance entre le faisceau de lumière principal (30) et le faisceau de lumière supplémentaire (31) sur le support d'enregistrement optique (10) se trouve un multiple entier d'un pas transversal.

**12.** Appareil pour l'écriture sur un support d'enregistrement optique (10) selon la revendication 1, **comprenant** :

    - un moyen (2, 4) pour la génération d'au moins un faisceau de lumière principal (30) et un faisceau de lumière supplémentaire (31) couplé au faisceau de lumière principal (30) ;
    - un moyen (9) permettant l'illumination de la structure de guide unique (15) avec le faisceau de lumière supplémentaire (31) ;
    - un moyen (131, 133) permettant la génération d'un signal d'erreur de suivi pour le faisceau de lumière principal (30) à partir d'une fraction du faisceau de lumière supplémentaire (31) reflété par la structure de guide unique (15) ; et
    - un moyen (2, 9) permettant l'écriture de données sur le support d'enregistrement optique (10) avec le faisceau de lumière principal (30) de sorte que les données écrites forment une continuation de la structure de guide unique (15)

**13.** Appareil selon la revendication 12, **dans lequel** une distance entre le faisceau de lumière principal (30) et le faisceau de lumière supplémentaire (31) sur le support d'enregistrement optique (10) se trouve un multiple entier d'un pas transversal.

**14.** Moule pour un appareil permettant la fabrication d'un support d'enregistrement optique (10) avec une zone d'enregistrement (16) et une structure guide (15) pour le suivi situé hors de la zone d'enregistrement (16), qui s'étend uniquement sur une ou plusieurs spirales de pistes ou pistes concentriques, **caractérisé en ce que** la zone d'enregistrement (16) est une zone d'enregistrement unique (16) et **en ce que** la structure du guide (15) est une structure de guide unique (15) située à l'extérieur de la zone d'enregistrement unique (16).

**Fig. 1**

**Fig. 2**

**Fig. 3**

**Fig. 4**

**Fig. 5**

**Fig. 6**

**Fig. 7**

**Fig. 8**

**Fig. 9**

**Fig. 10**

**EP 2 321 822 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0745978 A
- US 4507763 A

- EP 1933313 A